# EUROPÄISCHE PATENTSCHRIFT

(11) **EP 2 292 945 B1**
(45) Veröffentlichungstag und Bekanntmachung des Hinweises auf die Patenterteilung: **12.04.2017**
(21) Anmeldenummer: 10174631.1
(22) Anmeldetag: 31.08.2010
(51) Int. Cl.: F16D 65/56

(54) **Scheibenbremse mit Rutschkupplung für die Nachstelleinrichtung**
Disc brake with slip clutch for readjustment device
Frein à disque doté d'un accouplement à patinage pour le dispositif de réglage

(30) Priorität: 02.09.2009 DE 102009039800
(43) Veröffentlichungstag der Anmeldung: 09.03.2011
(73) Patentinhaber: KNORR-BREMSE Systeme für Nutzfahrzeuge GmbH, 80809 München (DE)
(72) Erfinder: Eichler, Thomas, 80809 München (DE)
(74) Vertreter: Mattusch, Gundula

(56) Entgegenhaltungen:
- EP-A1- 0 566 008
- DE-A1- 2 352 400
- JP-A- 10 047 326
- US-A1- 2005 008 446
- US-A1- 2006 024 142

## Beschreibung

Die Erfindung betrifft eine Scheibenbremse nach dem Oberbegriff des Anspruchs 1.

Eine derartige Bremse ist aus der EP 0 566 008 A1 bekannt.

Die in Rede stehende Fahrzeugbremse ist besonders für Nutzfahrzeuge ausgelegt. Bei diesen Fahrzeugen werden die Bremsbeläge aufgrund der hohen abzubremsenden Massen stark belastet. Der Verschleiß der Bremsbeläge ist demzufolge entsprechend hoch. Die Nachstelleinrichtung ist so ausgelegt, dass entsprechend der Abnutzung der Bremsbeläge eine Nachstellung erfolgt.

Beim Wechseln der Bremsbeläge kann es aufgrund der Auslegung der Nachstelleinrichtung zum Überschreiten eines zulässigen Drehmomentes der inneren Mechanik kommen. Dieses Drehmoment wird über die manuelle Rückstelleinrichtung bzw. die Nachstellspindel eingeleitet. Wird dabei ein bestimmtes Drehmoment überschritten, spricht die Rutschkupplung der Nachstellspindel an, die auch als Sicherheits- oder Überlastkupplung bezeichnet werden kann. Bei der in Rede stehenden Scheibenbremse hat sie die Aufgabe, die inneren Bauteile der Nachstelleinrichtung gegen eine Beschädigung oder gegen eine Zerstörung zu sichern.

Rutschkupplungen sind allgemein bekannt. Von der Funktion her unterscheidet man Reibkupplungen mit einer konstanten Anpresskraft, die jedoch auch einstellbar sein kann. Gemäß einer anderen Bauform werden sogenannte Lamellenkupplungen verwendet. Diese Lamellen bestehen aus Stahl, wobei sie jedoch auch noch mit Reibbelägen versehen sein können. Die Anpresskraft wird durch geeignete Federn erzeugt.

EP 0 566 008 A1 beschreibt eine druckluftbetätigte Scheibenbremse mit einem eine Bremsscheibe umfassenden Bremssattel, auf dessen Seite eine Zuspannvorrichtung angeordnet ist. Die Zuspannvorrichtung wirkt über mindestens eine Stellspindel und ein an deren bremsscheibenseitigen Ende sitzendes Druckstück auf eine zuspannseitig im Bremssattel bezüglich der Bremsscheibe verschiebbare Bremsbacke ein. Eine Nachstelleinrichtung ist mit der Stellspindel drehfest gekoppelt, um ein sich infolge Belagverschleißes änderndes Lüftspiel konstant zu halten. Die Nachstelleinrichtung ist mit einer extern betätigbaren Drehantriebseinrichtung gekoppelt, mittels welcher die Stellspindel in ihre Ausgangslage zurückbringbar ist. Die Drehantriebseinrichtung ist mit einer Trenneinrichtung, z.B. einer Sollbruchstelle oder einer Rutschkupplung, versehen, um eine Funktionsstörung der Bremse bei einem unsachgemäßen Bremsbelagwechsel zu verhindern, wenn ein bestimmtes Grenzdrehmoment dabei überschritten wird.

JP 10 047326 A beschreibt eine Schraube mit einer eingebauten Drehmomentbegrenzungseinrichtung. Ein Schraubenschaft mit Gewinde ist mit einer Scheibe mit umfänglich angeordneten Zahnflanken versehen, wobei die Zahnflanken von dem freien Ende des Schraubenschaftes wegweisen. In axialer Verlängerung des Schraubenschaftes ist ein zweiter Schraubenschaft mit kleinerem Durchmesser als der erstere und mit Gewinde angeordnet, welcher durch einen sechskantförmigen Schraubenkopf geführt ist. Der Schraubenkopf weist an seiner Unterseite eine mit der Verzahnung der Scheibe des Schraubenschaftes korrespondierende und in diese eingreifende Verzahnung auf. Der Schraubenkopf ist axial bewegbar. Auf den zweiten Schraubenschaft sind innerhalb des Schraubenkopfes Axialfedern, z.B. Tellerfedern, aufgesetzt und mit einer Mutter auf dem zweiten Schraubenschaft zur Einstellung eines Grenzdrehmomentes vorgespannt und gesichert. Dadurch wird die Verzahnung in Eingriff gehalten. Bei Überschreiten eines Drehmomentes an dem Schraubenkopf gerät die Verzahnung durch axiale Bewegung des Schraubenkopfes gegen die Kraft der vorgespannten Axialfeder außer Eingriff und begrenzt das Drehmoment.

US 2006/024142 A1 beschreibt einen Gewindebolzen mit Drehmomentbegrenzung. Der Gewindebolzen weist einen zylindrischen Kopf auf, welcher durch eine Öffnung in einem Boden einer mit Riffelung versehene zylindrische Hülse eingesetzt ist. Die Hülse umgibt den Kopf des Gewindebolzens und ist mit dem Kopf über einen Vierkantstab in Stiftform gekoppelt. Der Vierkantstab ist in Bohrungen der zylindrischen Wandung der Hülse an ihrem dem Gewindebolzen abgewandten, offenen Seite eingesetzt. Auf dem Kopf ist eine ringförmige, in Axialrichtung federnde Rampe drehfest aufgebracht, deren Umfangswinkel kleiner als 360° ist, so dass zwischen einem federnden, hochstehenden Ende und einem feststehenden Ende ein Abstand vorgesehen ist, der dem Querschnitt des Vierkantstabs entspricht, wobei der Abstand etwas größer ausgebildet ist. Der Vierkantstab kontaktiert die Oberfläche der federnden Rampe. Durch die Federkraft der federnden Rampe wird die Unterseite des Vierkantstabs gegen die federnde Rampe gepresst, wobei der Boden der Hülse, auf welchem der Kopf aufliegt, einen Axialanschlag bildet. Die Federkraft der federnden Rampe ist mitbestimmend für die Reibung zwischen Vierkantstab und der Oberfläche der federnden Rampe. Bei Einschrauben des Gewindebolzens, z.B. zum Festlegen eines Drahtes in eine Klemme, wird die Hülse manuell gedreht. Dabei wird der Gewindebolzen über die Reibwirkung zwischen der Unterseite des Vierkantstabs und der Oberfläche der federnden Rampe mitgedreht. Übersteigt das Drehmoment, das manuell auf die Hülse einwirkt, ein Grenzdrehmoment, so rutscht der Vierkantstab in einer Schwenkbewegung relativ zu der federnden Rampe bis zum Ende dieser, welches dem feststehenden Ende beabstandet gegenüberliegt, und rastet mit einem Klickgeräusch in den Abstand zwischen diesen Enden ein. Damit wird dem Benutzer akustisch signalisiert, dass das Grenzdrehmoment erreicht ist. Ein Weiterdrehen danach ist möglich, da der Vierkantstab das feststehende Ende kontaktiert. Bei einem Rückdrehen kontaktiert der Vierkantstab das federnde Ende der Rampe und übt so ein Drehmoment auf den Gewindebolzen zum Herausschrauben aus.

Mit Federn ausgestattete Rutschkupplungen sind konstruktiv aufwendig, die Einstellung der Anpresskräfte muss äußerst genau vorgenommen werden und die aus Federstahl bestehenden Federn ermüden im Laufe der Zeit.

Der vorliegenden Erfindung liegt die Aufgabe zugrunde, eine verbesserte Scheibenbremse der eingangs näher beschriebenen Art mit einer Nachstelleinrichtung so zu gestalten, dass die Rutschkupplungen in kostengünstiger Weise ohne Verwendung von Federn hergestellt werden können, wobei jedoch sichergestellt ist, dass auch nach mehreren Überlastungen die Rutschkupplung weder zerstört noch verschlissen wird.

Die gestellte Aufgabe wird dadurch gelöst, dass die Kupplungshälften durch mindestens einen im Elastizitätsbereich des Werkstoffes elastisch verformbaren, als Zugstab oder Drehstab ausgeführten Rückstellstab miteinander gekoppelt sind.

Es kann nunmehr auf Federn zur Erzeugung von Anpresskräften verzichtet werden, da die Elastizität des Werkstoffes aus dem jeder Rückstellstab hergestellt ist, ausgenutzt wird. Es kommen insbesondere metallische Werkstoffe für die Rückstellstäbe in Betracht, besonders geeignete Stahllegierungen. Der Elastizitätsmodul des Werkstoffes sollte relativ hoch sein, damit eine ausreichende elastische Verformung gegeben ist. Insbesondere die Elastizität von Stahllegierungen gewährleistet, dass eine mehrmalige elastische Verformung möglich ist, ohne dass es zu einem Bruch eines Rückstellstabes kommt.

Durch die konstruktive Gestaltung der Kupplungshälften in Verbindung mit den Rückstellstäben wird erreicht, dass beim Überschreiten eines bestimmten Drehmomentes die beiden Kupplungshälften relativ zueinander bewegt werden. Dazu ist eine entsprechende konstruktive Gestaltung notwendig, wie noch erläutert wird.

In einer ersten Ausführungsform ist vorgesehen, dass jeder Rückstellstab ein durch Zugkräfte elastisch verformbarer Zugstab ist. Die Kupplungshälften müssen dann so ausgelegt sein, dass sie sich beim Überschreiten eines bestimmten Drehmomentes in axialer Richtung verschieben können. Dazu ist dann vorgesehen, dass die Rutschkupplung aus einer Mehrkanthülse und einer topfförmigen Kupplungshülse gebildet ist, wobei die einander zugewandten Stirnflächen mit auf jeweils einer Ringfläche liegenden Stirnverzahnungen versehen sind, die ineinander greifen und keilförmig gestaltet sind. Dabei sind die Keilwinkel relativ gering, so dass beim Überschreiten eines bestimmten Drehmomentes der axiale Verschiebeweg einer Kupplungshälfte entsprechend gering ist. Sobald die Stirnverzahnungen wieder ineinander greifen, wird die elastische Verformung des Zugstabes aufgehoben.

Es ist vorgesehen, dass der Zugstab sich über die Höhe der Mehrkanthülse erstreckt und zentrisch in dieser angeordnet ist sowie an dem der Stirnverzahnung abgewandt liegenden Endbereich fest in die stirnseitige Wandung der Mehrkanthülse eingesetzt ist. Dadurch wird eine größtmögliche Länge des Zugstabes erreicht, so dass die elastische Verformung entsprechend hoch ist. Im Bereich der Stirnverzahnung ist das Ende des Zugstabes mit einem Kopf versehen, der die Stirnwand der Kupplungshülse hintergreift.

Die Stirnverzahnung besteht aus schräg stehenden Flanken und aus annähernd senkrecht dazu stehenden Flanken. Bei einer Überschreitung eines bestimmten Drehmomentes gleiten die schrägen Flanken aufeinander und bewirken die axiale Verschiebung einer Kupplungshälfte.

In weiterer Ausgestaltung ist noch vorgesehen, dass bei dieser ersten Ausführung die Kupplungshülse an der den Stirnverzahnungen abgewandten Seite innenseitig mit einer aus Längsstegen und Längsnuten gebildeten Profilierung versehen ist. Dadurch kann diese Kupplungshülse mit einem Gegenstück gekoppelt werden. Die Einstellung der Rutschkupplung erfolgt durch Verdrehen der Mehrkanthülse mittels eines geeigneten Werkzeuges. In bevorzugter Ausführung ist die Mehrkanthülse eine Sechskanthülse.

Gemäß einer zweiten konstruktiven Lösung ist vorgesehen, dass der Rückstellstab ein durch Torsions- und/oder Biegekräfte verdrehbarer oder verdrillbarer Drehstab ist.

Dieser Drehstab ist wiederum mit einem Ende fest eingespannt und so ausgelegt, dass beim Überschreiten eines bestimmten Drehmomentes dieser Drehstab ein klein wenig verformt wird, so dass zwischen den beiden Kupplungshälften eine Relativbewegung durchgeführt wird.

In weiterer Ausgestaltung ist vorgesehen, dass der Drehstab im Längsschnitt gesehen T-förmig gestaltet ist und dass er in der der Kupplungshülse abgewandten Wandung der Mehrkanthülse fest eingespannt ist. Dies erfolgt beispielsweise durch in einer der Querschnittsform des Drehstabes angepasste Ausnehmung der Stirnwandung der Mehrkanthülse. In dem in der Mehrkanthülse einliegenden Bereich ist der Drehstab als Flachstab ausgebildet, da dann die Bewegung durch die Torsions- und Biegekräfte in einen größtmöglichen Drehwinkel umgewandelt wird. Die Kupplungsbuchse ist zweckmäßigerweise im Verbindungsbereich der beiden Kupplungshälften bzw. -buchsen mit einer Innenverzahnung versehen.

Der Drehstab greift mit seinem quer zur Mittellängsachse der Kupplungshülse stehenden Raststeg in diese Verzahnung ein. Beim Überschreiten des Drehmoments erfolgt dann wiederum eine Verdrehung der Kupplungshülse gegenüber der Sechskanthülse. Die Einstellung des Drehmomentes erfolgt wiederum durch die Mehrkanthülse, die verdreht wird.

Anhand der beiliegenden Zeichnungen wird die Erfindung noch näher erläutert.

Es zeigen:
- Figur 1: die Zuspanneinrichtung und die innerhalb des Bremssattels angeordnete Bremsscheibe mit den Bremsbelägen der erfindungsgemäßen Scheibenbremse im Längsschnitt
- Figur 2: das erste Kupplungsteil in Form einer Kupplungshülse in einer Ansicht
- Figur 3: dass das Gegenstück bildende Bauteil in Form einer Mehrkanthülse in einer Ansicht
- Figur 4: die Mehrkanthülse und die Kupplungshülse im zusammengesetzten Zustand
- Figur 5: die Rutschkupplung in Schnittdarstellung
- Figur 6: die Rutschkupplung in einer zweiten Ausführungsform
- Figur 7: die Kupplungsbuchse gemäß der Figur 6 mit Blick auf die innere Verzahnung
- Figur 8: die Kupplungsbuchse gemäß der Figur 7, ausschließlich die Innenverzahnung zeigend
- Figur 9: die Rutschkupplung gemäß den Figuren 6 bis 8 in einer schräg gestellten Lage
- Figur 10: die Rutschkupplung gemäß den Figuren 6 bis 9 in Schnittdarstellung und
- Figur 11: die Kupplungsbuchse mit Blick auf die Verzahnung und den Raststeg des Drehstabes.

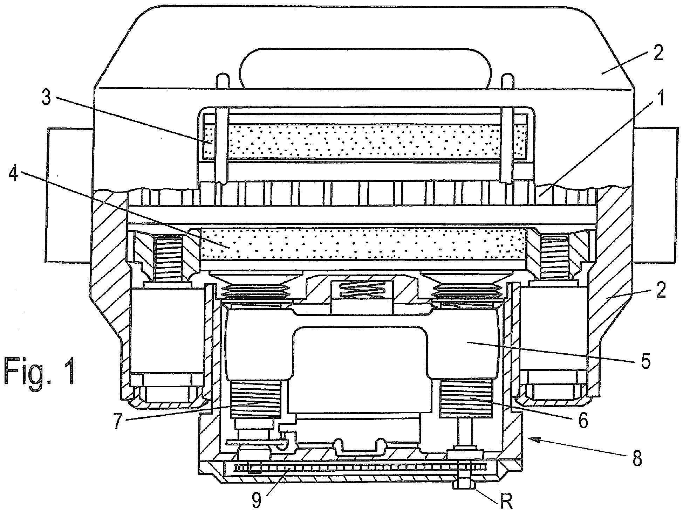

Die Figur 1 zeigt, dass eine auf einer nicht dargestellten Achse eines Nutzfahrzeuges aufgesetzte Bremsscheibe 1 in einem Bremssattel 2 angeordnet ist. Beidseitig der Bremsscheibe 1 sind die Bremsbeläge 3, 4 montiert. Die Scheibenbremse ist ferner vorzugsweise mit einer Traverse 5 ausgestattet, in der zwei parallel und im Abstand zueinander angeordnete Nachstellspindeln 6, 7 montiert sind. Durch das Bezugszeichen 8 ist die gesamte Zuspannvorrichtung bezeichnet.

Die beiden Nachstellspindeln 6, 7 sind über eine Synchronisationseinrichtung, im dargestellten Ausführungsbeispiel durch einen Kettentrieb 9 synchron miteinander gekoppelt. Eine komplette Scheibenbremse ist beispielsweise in der EP 0 566 008 A1 beschrieben.

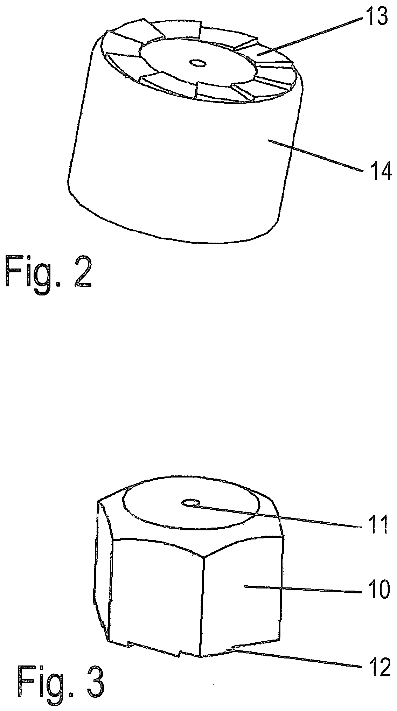

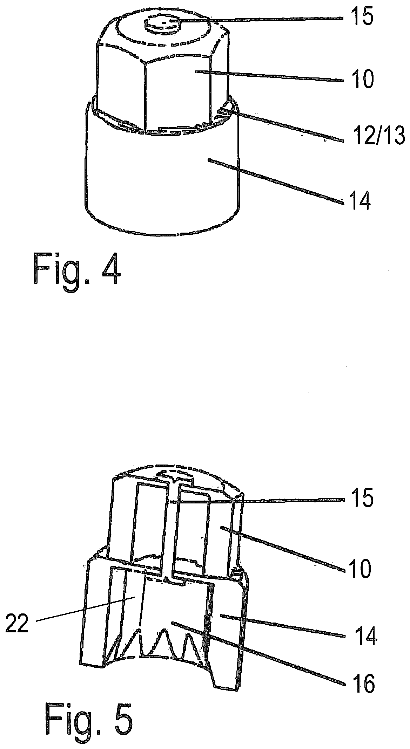

In den Figuren 2 bis 5 wird eine erste Ausführung der Rutschkupplung beschrieben. Vorzugsweise sitzt die Rutschkupplung an einem Ende einer der Nachstellspindeln, so dass sie zum Zurückdrehen beim Belagwechsel von außen zugänglich ist. Danach besteht sie im wesentlichen aus einer eine Kupplungshälfte bildenden Mehrkanthülse 10, einem die weitere Kupplungshälfte bildenden Kupplungshülse 14 und einem die beiden Teile verbindenden Zugstab 15. Wie die Figuren 2 und 3 zeigen, ist die Mehrkanthülse 10 und die Kupplungshülse 14 an einem Stirnende mit jeweils einer Stirnverzahnung 12, 13 versehen, die gemäß der Figur 4 miteinander in Eingriff stehen. Die Zähne sind keilförmig gestaltet, wobei der Keilwinkel relativ gering ist und nur einige Winkelgrade beträgt. Insbesondere die Figur 5 zeigt, dass die Mehrkanthülse 10 mit der Kupplungshülse 14 über einen Rückstellstab in Form eines Zugstabes 15 miteinander verbunden sind. Dieser Zugstab 15 durchgreift die Mehrkanthülse 10 und ist mit einem Kopf ausgestattet, der außen an der Stirnfläche der Mehrkanthülse 10 anliegt. An der gegenüberliegenden Seite ist ebenfalls ein Kopf angeformt, der die Stirnfläche der Kupplungshülse 14 hintergreift.

Die Stirnverzahnungen 12, 13 sind so ausgelegt, dass beim Überschreiten eines bestimmten Drehmomentes die Kupplungshülse 14 gedreht wird. Dadurch wird der Zugstab 15 gedehnt und bewirkt, dass die Stirnverzahnungen 12, 13 wieder flächig aneinander liegen, wenn ein Zahn übersprungen ist. Dazu bringt der Zugstab 15 eine Rückstellkraft auf.

Die Kupplungshülse 14 ist an ihrem freien, der Mehrkanthülse 15 abgewandten Ende mit einer Profilierung 22 versehen, um darin ein entsprechendes Gegenstück der Nachstellspindel drehmomentübertragend einzusetzen.

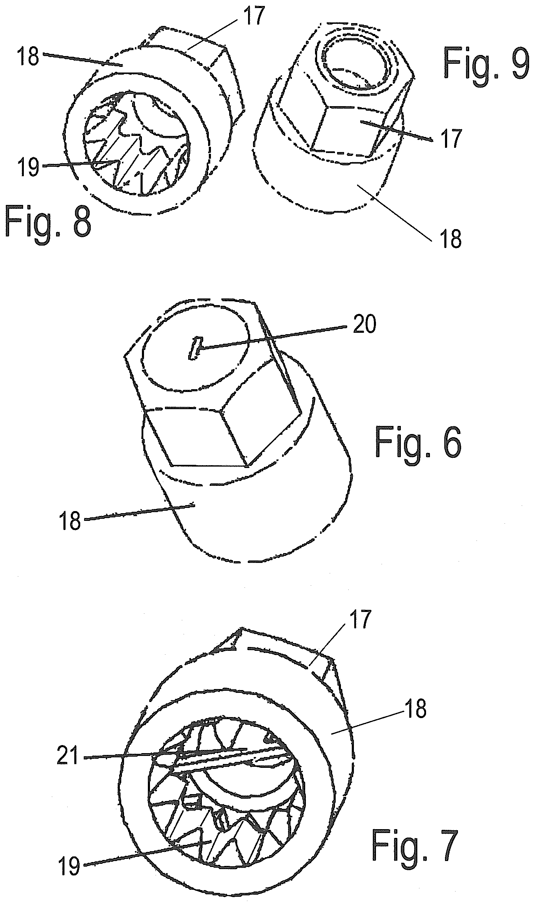

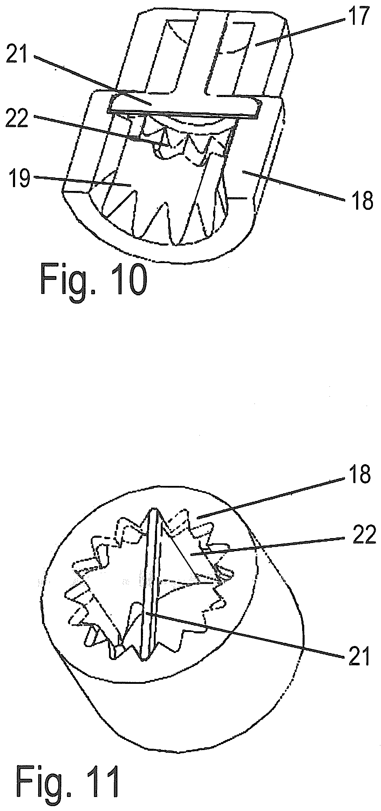

Die Figuren 6 bis 11 zeigen eine zweite Ausführungsform der erfindungsgemäßen Rutschkupplung. Die beiden Kupplungshälften werden wiederum durch eine Mehrkantbuchse 17 und eine Kupplungsbuchse 18 gebildet. Diese beiden Hülsen sind durch einen Rückstellstab miteinander verbunden, der durch Torsions- oder Biegekräfte im elastischen Bereich verdreht wird. Ein Ende dieses Torsionsstabes ist in eine Klemmöffnung 20 der Mehrkanthülse 17 eingesetzt. Dieser Torsionsstab ist im Längsschnitt T-förmig gestaltet und weist an der der Klemmöffnung 20 gegenüberliegenden Ende einen Raststeg 21 auf, der die Funktion eines Überratschelementes ausführt. Die beiden Stirnendbereiche dieses Raststeges 21 greifen in eine innere Profilierung bzw. Verzahnung 19 der Kupplungsbuchse 18 ein. Diese Gestaltung ergibt sich besonders aus den Figuren 10 und 11. Auf diese Kupplungsbuchse 18 ist im freien Endbereich mit aus einer aus Stegen und Nuten gebildeten Verzahnung 19 versehen, um die Rutschkupplung R auf eine entsprechende Kontur der Nachstellspindel aufzusetzen.

Die Erfindung ist nicht auf die dargestellten Ausführungsbeispiele beschränkt. Wesentlich ist, dass beim Überschreiten eines vorbestimmten Drehmomentes die beiden Kupplungshälften gegeneinander verdreht sind, und dass durch diese Verdrehung ein Zugstab 15 gelängt oder ein Drehstab verdrillt wird.

Der Begriff des Mehrkants ist nicht einschränkend zu verstehen. Er umfasst Drehmomentübertragungskonturen verschiedenster Art.

### Bezugszeichenliste

- 1: Bremsscheibe
- 2: Bremssattel
- 3: Bremsbelag
- 4: Bremsbelag
- 5: Traverse
- 6: Nachstellspindel
- 7: Nachstellspindel
- 8: Zuspanneinrichtung
- 9: Kettentrieb
- 10: Mehrkanthülse
- 11: Bohrung
- 12: Stirnverzahnung
- 13: Stirnverzahnung
- 14: Kupplungshülse
- 15: Zugstab
- 16: Profilierung
- 17: Mehrkantbuchse
- 18: Kupplungsbuchse
- 19: Verzahnung
- 20: Klemmöffnung
- 21: Raststeg
- 22: Profilierung
- R: Rutschkupplung

## Patentansprüche

1. Scheibenbremse, die einen Bremssattel (2) umfasst, in dem eine Bremsscheibe (1) und zwei beidseitig der Bremsscheibe (1) angeordnete Bremsbeläge (3, 4) montiert sind, und die zur Kompensierung des Verschleißes der Bremsbeläge (3, 4) mit einer Nachstelleinrichtung ausgestattet ist, die mindestens eine Nachstellspindel (6, 7) aufweist, der eine beim Zurückdrehen beim Belegwechsel beim Überschreiten eines bestimmten Drehmomentes ansprechende, aus zwei Kupplungshälften bestehende Rutschkupplung (R),
**dadurch gekennzeichnet, dass**
die Rutschkupplung (R) aus einer Mehrkanthülse (10) und einer Kupplungshülse (14) besteht, und dass die einander zugewandten Stirnflächen der Mehrkanthülse (10) und der Kupplungshülse (14) jeweils eine Ringfläche mit ineinander greifenden Stirnverzahnungen (12, 13) aufweisen, wobei diese Stirnverzahnungen (12, 13) keilförmig ausgebildet sind, wobei die Kupplungshälften (10, 14) durch mindestens einen im Elastizitätsbereich des Werkstoffes durch Zugkräfte elastisch verformbaren Zugstab (15) miteinander gekoppelt sind, wobei der Zugstab (15) sich über die Höhe der Mehrkanthülse (10) erstreckt und zentrisch in dieser angeordnet ist sowie der der Stirnverzahnung (12, 13) abgewandte Bereich fest in die stirnseitige Wandung der Mehrkanthülse (10) eingesetzt ist,
wobei die Kupplungshülse (14) topfförmig ist, und die Keilwinkel derart sind, dass unter Dehnung des Zugstabes eine Relativbewegung zwischen der Mehrkanthülse (10) und der Kupplungshülse (14) durchführbar ist.

2. Scheibenbremse nach Anspruch 1, **dadurch gekennzeichnet, dass** die Kupplungshülse (14) an der der Stirnverzahnung (12, 13) abgewandten Seite innenseitig mit einer aus Längsstegen und Naben gebildeten Verzahnung (19) versehen ist.

3. Scheibenbremse, die einen Bremssattel (2) umfasst, in dem eine Bremsscheibe (1) und zwei beidseitig der Bremsscheibe (1) angeordnete Bremsbeläge (3, 4) montiert sind, und die zur Kompensierung des Verschleißes der Bremsbeläge (3, 4) mit einer Nachstelleinrichtung ausgestattet ist, die mindestens eine Nachstellspindel (6, 7) aufweist, der eine beim Zurückdrehen beim Belegwechsel beim Überschreiten eines bestimmten Drehmomentes ansprechende, aus zwei Kupplungshälften bestehende Rutschkupplung (R) zugeordnet ist,
**dadurch gekennzeichnet, dass** die Rutschkupplung (R) aus einer Mehrkanthülse (17) und einer Kupplungshülse (18) mit einander zugewandten Stirnflächen besteht, wobei die Kupplungshälften (17, 18) durch mindestens einen im Elastizitätsbereich des Werkstoffes durch Torsions- und/oder Biegekräfte verdrehbaren oder verdrillbaren Drehstab miteinander gekoppelt sind, wobei der Drehstab sich über die Höhe der Mehrkanthülse (17) erstreckt und zentrisch in dieser angeordnet ist, wobei der Drehstab im Bereich der Kupplungsbuchse (18) einen Raststeg (21) aufweist, dessen Endbereiche in eine innere Verzahnung (19) der Kupplungsbuchse (18) eingreifen und die Funktion eines Überratschelementes ausführen.

4. Scheibenbremse nach Anspruch 3, **dadurch gekennzeichnet, dass** im Längsschnitt gesehen, der Drehstab T-förmig gestaltet ist, wobei ein Ende in der Mehrkanthülse (17) festgelegt ist.

5. Scheibenbremse nach Anspruch 4, **dadurch gekennzeichnet, dass** in der stirnseitigen Wandung der Mehrkanthülse (17) eine Klemmöffnung (20) vorgesehen ist, in die der Endbereich des Drehstabes eingreift.

6. Scheibenbremse nach einem oder mehreren der Ansprüche 3 bis 5, **dadurch gekennzeichnet, dass** der Drehstab im Bereich der Mehrkanthülse (17) als Flachstab ausgebildet ist.

## Claims

1. Disc brake comprising a brake calliper (2), in which are mounted a brake disc (1) and two brake pads (3, 4) located on either side of the brake disc (1) and which, in order to compensate for the wear of the brake pads (3,4), is provided with an adjustment device comprising at least one adjusting spindle (6, 7), to which is assigned a slipping clutch (R) consisting of two clutch halves and responding to a defined torque being exceeded in the turning-back process during a pad change operation,
**characterised in that** the slipping clutch (R) consists of a polygonal sleeve (10) and a clutch sleeve (14) and **in that** the facing end faces of the polygonal sleeve (10) and the clutch sleeve (14) have an annular surface each with meshing end toothings (12, 13), wherein the end toothings (12, 13) are wedge-shaped, wherein the clutch halves (10, 14) are coupled to each other by at least one tie rod (15), which is elastically deformable by tensile forces within the elasticity range of the material, wherein the tie rod (15) extends along the height of the polygonal sleeve (10) and is arranged centrally therein and wherein the region remote from the end toothings (12, 13) is firmly installed into the end face wall of the polygonal sleeve (10),
wherein the clutch sleeve (14) is pot-shaped and the wedge angles are designed such that a relative movement is possible between the polygonal sleeve (10) and the clutch sleeve (14) while the tie rod is turned.

2. Disc brake according to claim 1, **characterised in that** the clutch sleeve (14) is provided on the inside with a toothing (19) formed from longitudinal webs and hubs on the side remote from the end toothing (12, 13).

3. Disc brake comprising a brake calliper (2), in which are mounted a brake disc (1) and two brake pads (3, 4) located on either side of the brake disc (1) and which, in order to compensate for the wear of the brake pads (3, 4), is provided with an adjustment device comprising at least one adjusting spindle (6, 7), to which is assigned a slipping clutch (R) consisting of two clutch halves and responding to a defined torque being exceeded in the turning-back process during a pad change operation,
**characterised in that** the slipping clutch (R) consists of a polygonal sleeve (17) and a clutch sleeve (18) with facing end faces, wherein the clutch halves (17, 18) are coupled to each other by at least one torsion bar which is turnable or twistable by torsion and/or bending forces within the elasticity range of the material, wherein the torsion bar extends along the height of the polygonal sleeve (17) and is arranged centrally therein and wherein the torsion bar has in the region of the clutch sleeve (18) a latching web (31), the end regions of which engage with an internal toothing (19) of the clutch sleeve (18) and perform the function of an over-ratchet element.

4. Disc brake according to claim 3, **characterised in that** the torsion bar is T-shaped in longitudinal section, one end being located in the polygonal sleeve (17).

5. Disc brake according to claim 4, **characterised in that** a clamping opening (20) with which the end region of the torsion bar engages is provided in the end face wall of the polygonal sleeve (17).

6. Disc brake according to one or more of claims 3 to 5, **characterised in that** the torsion bar is designed as a flat bar in the region of the polygonal sleeve (17).

## Revendications

1. Frein à disque qui comprend un étrier de frein (2) dans lequel un disque de frein (1) et deux garnitures de frein (3, 4) disposées des deux côtés du disque de frein (1) sont montés, et qui, pour la compensation de l'usure des garnitures de frein (3, 4), est équipé d'un dispositif de rattrapage (3, 4) qui présente au moins une broche de rattrapage (6, 7) à laquelle est associé un accouplement à patinage (R) composé de deux moitiés d'accouplement et réagissant lors de la rotation en marche arrière lors du changement de garniture en cas de dépassement d'un couple déterminé,
**caractérisé en ce que** l'accouplement à patinage (R) se compose d'une douille polygonale (10) et d'une douille d'accouplement (14), et **en ce que** les faces frontales tournées l'une vers l'autre de la douille polygonale (10) et de la douille d'accouplement (14) présentent respectivement une face annulaire dotée de dentures frontales (12, 13) qui s'engrènent les unes dans les autres, sachant que les dentures frontales (12, 13) sont constituées en forme de coins, sachant que les moitiés d'accouplement (10, 14) sont couplées l'une à l'autre par au moins une barre de traction (15) déformable élastiquement dans la plage d'élasticité du matériau par des efforts de traction, sachant que la barre de traction (15) s'étend au-delà de la hauteur de la douille polygonale (10) et est disposée de manière centrée dans celle-ci, et **en ce que** la zone opposée à la denture frontale (12, 13) est fermement insérée dans la paroi frontale de la douille polygonale (10),
sachant que la douille d'accouplement (14) est en forme de pot, et les angles de coin sont tels qu'un mouvement relatif entre la douille polygonale (10) et la douille d'accouplement (14) puisse être effectué moyennant un allongement de la barre de traction.

2. Frein à disque selon la revendication 1, **caractérisé en ce que** la douille d'accouplement (14) est pourvue d'une denture (19) constituée, du côté opposé à la denture frontale (12, 13), côté intérieur, de nervures longitudinales et de moyeux.

3. Frein à disque qui comprend un étrier de frein (2) dans lequel un disque de frein (1) et deux garnitures de frein (3, 4) disposées des deux côtés du disque de frein (1) sont montés, et qui, pour la compensation de l'usure des garnitures de frein (3, 4), est équipé d'un dispositif de rattrapage (3, 4) qui présente au moins une broche de rattrapage (6, 7) à laquelle est associé un accouplement à patinage (R) composé de deux moitiés d'accouplement et réagissant lors de la rotation en marche arrière lors du changement de garniture en cas de dépassement d'un couple déterminé,
**caractérisé en ce que** l'accouplement à patinage (R) se compose d'une douille polygonale (17) et d'une douille d'accouplement (18) présentant des faces frontales tournées l'une vers l'autre, sachant que les moitiés d'accouplement (17, 18) sont couplées l'une à l'autre par au moins une barre de rotation déformable en rotation ou en torsion dans la plage d'élasticité du matériau par des efforts de torsion et/ou de flexion, sachant que la barre de rotation s'étend au-delà de la hauteur de la douille polygonale (17) et est disposée de manière centrée dans celle-ci, sachant que la barre de rotation présente, dans la zone de la douille d'accouplement (18), une nervure d'encliquetage (21) dont les zones d'extrémité s'engrènent dans une denture intérieure (19) de la douille d'accouplement (18) et exécutent la fonction d'un élément de surencliquetage.

4. Frein à disque selon la revendication 3, **caractérisé en ce que,** vue en coupe longitudinale, la barre de rotation est configurée en forme de T, sachant qu'une extrémité est fixée dans la douille polygonale (17).

5. Frein à disque selon la revendication 4, **caractérisé en ce qu**'une ouverture de blocage (20) dans laquelle la zone d'extrémité de la barre de rotation s'engrène est prévue dans la paroi côté frontal de la douille polygonale (17).

6. Frein à disque selon l'une ou plusieurs des revendications 3 à 5, **caractérisé en ce que** la barre de rotation est constituée comme barre plate dans la zone de la douille polygonale (17).
